# FASCICULE DE BREVET EUROPEEN

(11) **EP 0 566 475 B1**
(45) Date de publication et mention de la délivrance du brevet: **13.03.1996**
(21) Numéro de dépôt: 93400956.4
(22) Date de dépôt: 13.04.1993
(51) Int. Cl.: B60H 1/00, B60H 1/22

(54) **Dispositif de climatisation d'un véhicule électrique**
Klimaanlage für ein elektrisches Fahrzeug
Air conditioning device for an electric vehicle

(30) Priorité: 16.04.1992 FR 9204712
(43) Date de publication de la demande: 20.10.1993
(73) Titulaire: Valeo Climatisation, F-78321 La Verrière (FR)
(72) Inventeur: Benedict, Olusegun, F-91940 Les Ulis (FR)
(74) Mandataire: Gamonal, Didier

(56) Documents cités:
- WO-A-92/16389
- DE-A- 2 451 221
- DE-A- 3 207 383
- US-A- 2 780 077
- PATENT ABSTRACTS OF JAPAN vol. 7, no. 24 (M-189)(1169) 29 Janvier 1983 & JP-A-57 178 913 (DIESEL KIKI) 4 Novembre 1982

## Description

L'invention concerne la climatisation des véhicules, notamment des véhicules électriques.

Un dispositif connu pour régler la température dans l'habitacle d'un véhicule utilise un appareil de climatisation dans lequel un fluide réfrigérant circule de façon univoque entre un évaporateur où il reçoit de la chaleur d'un flux d'air et un condenseur où il cède de la chaleur à un flux d'air. Dans ce dispositif connu, lorsqu'on souhaite refroidir un flux d'air avant de l'envoyer dans l'habitacle, on le met en contact avec l'évaporateur.

En revanche, lorsqu'on souhaite réchauffer un flux d'air avant de l'envoyer dans l'habitacle, on utilise habituellement à cet effet la chaleur dégagée par le moteur thermique d'entraînement du véhicule.

Dans le cas d'un véhicule électrique, la chaleur produite par le système d'entraînement électrique n'est pas suffisante, en hiver, pour couvrir les besoins de chauffage de l'habitacle. Il est alors nécessaire de prévoir une source auxiliaire de chaleur.

Le but de l'invention est de tirer parti, pour le chauffage de l'habitacle, de l'appareil de climatisation existant, sans changer le sens de circulation du fluide réfrigérant.

L'invention vise un dispositif dans lequel le circuit d'air comprend deux entrées d'air extérieur associées respectivement à une première branche de circuit d'air dans laquelle est placé l'évaporateur et une seconde branche de circuit d'air dans laquelle est placé le condenseur, une conduite d'évacuation vers l'extérieur et des moyens pour mettre en communication deux à deux, de façon alternée en fonction d'une consigne, les première et seconde branches avec une entrée d'air vers l'habitacle et avec la conduite d'évacuation.

Des caractéristiques optionnelles avantageuses du dispositif selon l'invention sont énoncées ci-après.
- Des composants à refroidir du véhicule sont disposés dans une branche amont du circuit d'air interposée entre la première branche et l'entrée d'air extérieur correspondante.
- Une source de chauffage d'appoint munie de moyens de commande est disposée dans la branche amont.
- Les composants à refroidir comprennent une batterie d'alimentation pour un moteur électrique d'entraînement du véhicule et/ou un compresseur appartenant à l'appareil de climatisation.
- La branche amont est subdivisée en deux branches en parallèle dont l'une contient la batterie et dont l'autre contient le compresseur et/ou la source d'appoint.
- Il comprend des moyens pour mettre en communication l'extrémité aval de la branche amont sélectivement avec la première branche ou avec la conduite d'évacuation, et/ou des moyens pour fermer l'entrée de la branche amont, une première conduite de recyclage permettant d'amener de l'air de l'habitacle dans la première branche lorsque celle-ci ne reçoit pas d'air de la branche amont.
- Il comprend des moyens pour fermer l'entrée d'air extérieur de la seconde branche, et une seconde conduite de recyclage permettant d'amener de l'air de l'habitacle dans la seconde branche lorsque cette entrée est fermée.
- Il comprend un second évaporateur placé dans la seconde branche et monté en parallèle, sur le circuit du fluide réfrigérant, avec le premier évaporateur placé dans la première branche.

D'autres caractéristiques et avantages de l'invention apparaîtront à l'examen de la description détaillée ci-après, et des dessins annexés, sur lesquels :
- les figures 1 à 5 sont des schémas d'un dispositif selon l'invention montrant la configuration du circuit d'air dans différentes conditions de fonctionnement ; et
- la figure 6 est un schéma analogue à la figure 2, relatif à une variante du dispositif.

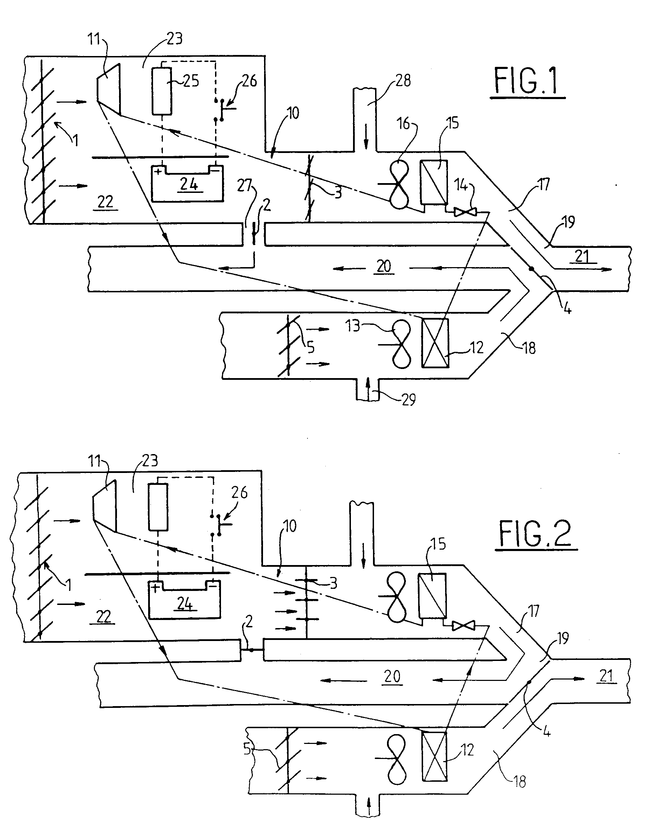

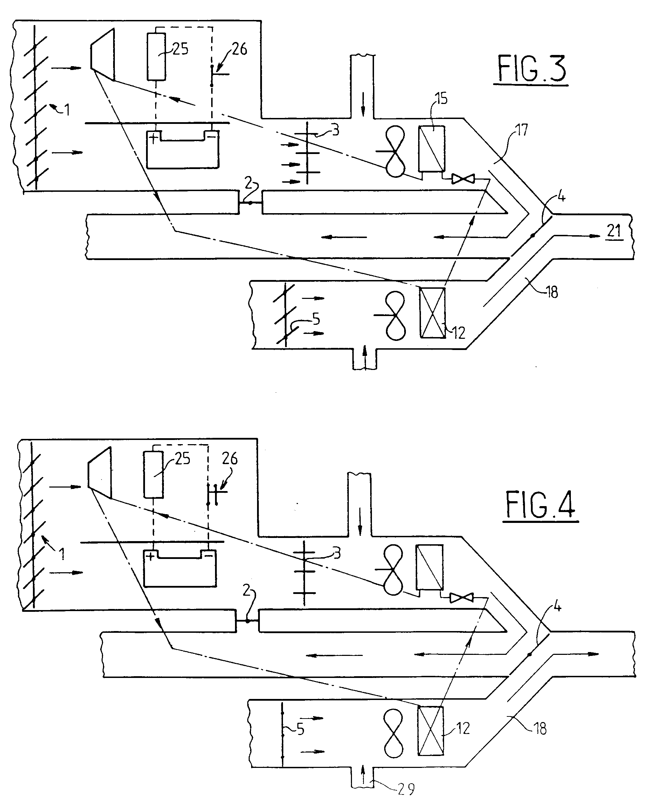

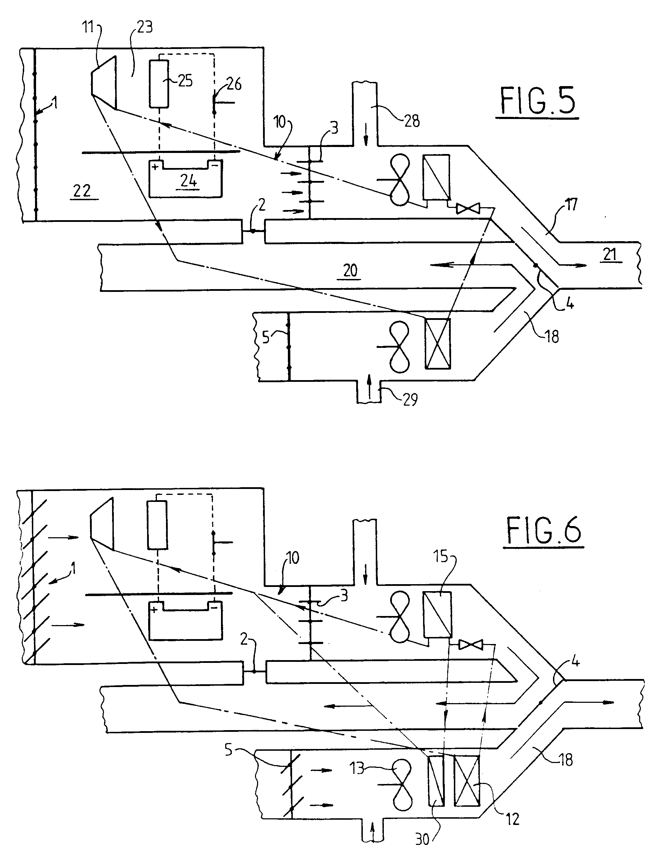

Les schémas des figures 1 à 5 montrent un circuit de fluide réfrigérant 10 en boucle fermée sur lequel sont disposés, dans cet ordre, un compresseur 11, un condenseur 12 associé à un groupe moto-ventilateur 13, un détendeur 14 et un évaporateur 15 associé à un groupe moto-ventilateur 16. Le détendeur 14, l'évaporateur 15 et le groupe moto-ventilateur 16 sont placés dans une première branche 17 du circuit d'air et le condensateur 12 et son groupe moto-ventilateur 13 dans une seconde branche 18 du circuit d'air. Les extrémités amont des branches 17 et 18 peuvent être fermées de façon commandée par des obturateurs respectifs 3 et 5 représentés dans le schéma sous forme de jeux de lamelles pivotantes, et les extrémités aval de ces deux branches débouchent dans un noeud de raccordement 19, d'où partent une conduite 20 d'évacuation d'air vers l'extérieur du véhicule et une conduite 21 d'entrée d'air dans l'habitacle. Dans le noeud 19 est disposé un volet de commutation 4 qui peut se déplacer entre une première position, illustrée aux figures 1 et 5, où les branches 17 et 18 sont en communication respectivement avec les conduites 21 et 20 et une seconde position, illustrée aux figures 2 à 4, où les branches 17 et 18 sont en communication avec les conduites 20 et 21 respectivement.

Deux branches en parallèle 22 et 23 du circuit d'air sont disposées en amont de l'obturateur 3 de façon à communiquer avec la branche 17 lorsque celui-ci est ouvert. La branche 22 contient une batterie 24 pour l'alimentation du moteur électrique d'entraînement du véhicule, et la branche 23 contient le compresseur 11 et une résistance chauffante 25 pouvant être alimentée par la batterie 24 à travers un interrupteur 26. Un obturateur 1 peut être commandé de façon à fermer l'entrée commune des branches 22 et 23, reliée à l'atmosphère extérieure, et un obturateur 2 commande une ouverture 27 faisant communiquer l'extrémité aval commune aux branches 22 et 23 avec la conduite d'évacuation 20. Deux conduites de recyclage 28 et 29 permettent d'amener de l'air de l'habitacle du véhicule aux branches 17 et 18 respectivement, en amont des composants 12 à 16 du circuit 10.

La figure 1 représente la configuration du circuit d'air pour l'utilisation du dispositif en été. Le circuit de fluide réfrigérant est utilisé de façon classique pour produire du froid au niveau de l'évaporateur 15. L'obturateur 3 est au moins en grande partie fermé, et le groupe moto-ventilateur 16 aspire de l'air recyclé par la conduite 28. Cet air est refroidi par contact avec l'évaporateur 15 et renvoyé dans l'habitacle par la conduite 21. Le condenseur 12 est refroidi par de l'air extérieur parcourant la branche 18, l'obturateur 5 étant ouvert. L'air ainsi réchauffé est évacué vers l'extérieur par la conduite 20, ainsi que l'air provenant de l'extérieur et circulant dans les branches 22 et 23 pour refroidir le compresseur 11 et la batterie 24, les obturateurs 1 et 2 étant ouverts. Bien entendu, l'interrupteur 24 est ouvert et la résistance 25 est hors service. Une ouverture partielle éventuelle de l'obturateur 3 permet de régler la température dans l'habitacle en y admettant, par l'intermédiaire de la branche 17, une petite fraction de l'air réchauffé dans les branches 22 et 23.

La figure 2 représente la configuration du circuit pour une utilisation en hiver, lorsque la température extérieure est modérée, comprise entre une limite inférieure d'environ 5 à 7°C et une limite supérieure d'environ 15°C. Le circuit de fluide réfrigérant 10 fonctionne pour produire de la chaleur au niveau du condenseur 12. L'habitacle reçoit par la conduite 21 exclusivement de l'air réchauffé par ce condenseur, introduit dans la branche 18 à travers l'obturateur 5 ouvert. Les obturateurs 1 et 3 étant également ouverts et l'obturateur 2 fermé, de l'air extérieur est admis dans les branches 22 et 23 pour refroidir le compresseur 11 et la batterie 24, puis passe sur l'évaporateur 15 auquel il cède de la chaleur, avant d'être évacué vers l'extérieur à travers le noeud 19 et la conduite 20. Ici encore, l'interrupteur 26 est ouvert.

La figure 3 correspond à une utilisation par grand froid, la température extérieure étant au-dessous de la limite inférieure précitée. Les positions des obturateurs sont les mêmes qu'à la figure 2. Seul diffère le fait que l'interrupteur 26 est fermé. La résistance 25 dégage donc de la chaleur. L'air sortant des branches 22 et 23 et entrant dans la branche 17 est plus chaud, ce qui élève la température de l'évaporateur 15 et par conséquent celle du condenseur 12, qui à son tour chauffe davantage l'air parcourant la branche 18 et pénétrant dans l'habitacle par la conduite 21.

La figure 4 illustre le fonctionnement du dispositif en hiver avec de l'air recyclé. Cette figure diffère des figures 2 et 3 en ce que l'obturateur 5 est fermé, de telle sorte que l'air réchauffé par le condenseur 12 dans la branche 18 provient de l'habitacle par la conduite 29. En fonction de la température extérieure, l'interrupteur 26 peut être ouvert, comme à la figure 2, ou fermé, comme à la figure 3.

La figure 5 illustre l'utilisation du dispositif en hiver, au démarrage du circuit de fluide réfrigérant, lorsque celui-ci n'est pas encore en mesure de produire la chaleur nécessaire au chauffage de l'habitacle. Les obturateurs 1 et 5 sont fermés de façon que seul de l'air recyclé soit admis dans les branches 17 et 18 par les conduites de recyclage 28 et 29. L'obturateur 2 est également fermé, l'obturateur 3 est ouvert de façon à faire communiquer la branche 17 avec les branches 22 et 23, et le volet 4 est disposé de façon à faire communiquer les branches 17 et 18 respectivement avec les conduites 21 et 20. L'interrupteur 26 est fermé, et l'air envoyé dans l'habitacle est chauffé par le compresseur 11, la batterie 24 et la résistance 25. Dès que le circuit de fluide réfrigérant 10 est opérationnel, le dispositif passe dans l'une des configurations des figures 2 à 4.

La figure 6 illustre une variante du dispositif des figures 1 à 5, dans une configuration correspondant à celle de la figue 2. Cette variante se caractérise par la présence d'un second évaporateur 30, monté dans le circuit de fluide réfrigérant 10 en parallèle avec l'évaporateur 15, et disposé dans la branche 18 du circuit d'air, dans l'exemple représenté en amont du condenseur 12, de façon à être également balayé par le courant d'air produit par le groupe moto-ventilateur 13. L'évaporateur 30 est interposé entre le groupe moto-ventilateur 13 et le condenseur 12. Ce second évaporateur provoque une condensation de l'humidité présente dans le courant d'air parcourant la branche 18, et favorise donc le désembuage du pare-brise du véhicule.

Dans le dispositif des figures 1 à 5 comme dans celui de la figure 6, chacun des obturateurs 1, 3 et 5 peut être placé dans diverses positions intermédiaires pour régler la fraction d'air recyclé parcourant les branches 17 et 18 du circuit d'air.

## Revendications

1. Dispositif pour régler la température dans l'habitacle d'un véhicule en utilisant un appareil de climatisation (10) dans lequel un fluide réfrigérant circule de façon univoque entre un évaporateur (15) où il reçoit de la chaleur d'un flux d'air et un condenseur (12) où il cède de la chaleur à un flux d'air, dispositif dans lequel un flux d'air est refroidi par contact avec l'évaporateur ou réchauffé par contact avec le condenseur avant d'être envoyé dans l'habitacle, caractérisé en ce qu'il comprend deux entrées d'air extérieur associées respectivement à une première branche (17) de circuit d'air dans laquelle est placé l'évaporateur (15) et une seconde branche (18) de circuit d'air dans laquelle est placé le condenseur (12), une conduite (20) d'évacuation vers l'extérieur et des moyens (4) pour mettre en communication deux à deux, de façon alternée en fonction d'une consigne, les première et seconde branches (17,18) avec une entrée d'air (21) vers l'habitacle et avec la conduite d'évacuation (20).

2. Dispositif selon la revendication 1, caractérisé en ce que des composants à refroidir (11,24) du véhicule sont disposés dans une branche amont (22,23) du circuit d'air interposée entre la première branche et l'entrée d'air extérieur correspondante.

3. Dispositif selon la revendication 2, caractérisé en ce qu'une source de chauffage d'appoint (25) munie de moyens de commande (26) est disposée dans la branche amont.

4. Dispositif selon l'une des revendications 2 et 3, caractérisé en ce que les composants à refroidir comprennent une batterie d'alimentation (24) pour un moteur électrique d'entraînement du véhicule et/ou un compresseur (11) appartenant à l'appareil de climatisation (10).

5. Dispositif selon la revendication 4, caractérisé en ce que la branche amont est subdivisée en deux branches en parallèle dont l'une (22) contient la batterie et dont l'autre (23) contient le compresseur et/ou la source d'appoint.

6. Dispositif selon l'une des revendications 2 à 5, caractérisé en ce qu'il comprend des moyens (27,2) pour mettre en communication l'extrémité aval de la branche amont (22,23) sélectivement avec la première branche (17) ou avec la conduite d'évacuation (20), et/ou des moyens (1) pour fermer l'entrée de la branche amont, une première conduite de recyclage (28) permettant d'amener de l'air de l'habitacle dans la première branche lorsque celle-ci ne reçoit pas d'air de la branche amont.

7. Dispositif selon l'une des revendications 1 à 6, caractérisé en ce qu'il comprend des moyens (5) pour fermer l'entrée d'air extérieur de la seconde branche (18), et une seconde conduite de recyclage (29) permettant d'amener de l'air de l'habitacle dans la seconde branche lorsque cette entrée est fermée.

8. Dispositif selon l'une des revendications 1 à 7, caractérisé en ce qu'il comprend un second évaporateur (30) placé dans la seconde branche (18) et monté en parallèle, sur le circuit (10) du fluide réfrigérant, avec le premier évaporateur (15) placé dans la première branche (17).

## Claims

1. Apparatus for controlling the temperature in the cabin of a vehicle by means of an air conditioning apparatus (10) in which a refrigerant fluid flows in one direction only, between an evaporator (15), in which it receives heat from an air stream, and a condenser (12) in which it yields heat to an air stream, in which apparatus an air stream is cooled by contact with the evaporator, or heated by contact with the condenser, before being delivered into the cabin, characterised in that it includes two fresh air inlets, associated with a first air circuit branch (17) in which the evaporator is located, and a second air circuit branch (18) in which the condenser (12) is located, a duct (20) for evacuation of air to the outside, and means (4) for bringing the first and second branches (17, 18) into communication, two by two and selectively according to demand, with an air inlet (21) for admission of air to the cabin and with the evacuation duct (20).

2. Apparatus according to Claim 1, characterised in that components (11, 24) to be cooled are disposed in an upstream branch (22, 23) of the air circuit, which is interposed between the first branch and the corresponding fresh air inlet.

3. Apparatus according to Claim 2, characterised in that a source of applied heat (25), having control means (26), is arranged in the upstream branch.

4. Apparatus according to Claim 2 or Claim 3, characterised in that the components to be cooled comprise a power supply battery (24) for an electric propulsion motor of the vehicle and/or a compressor (11) which is part of the air conditioning apparatus (10).

5. Apparatus according to Claim 4, characterised in that the upstream branch is subdivided into two branches in parallel, one of which (22) contains the battery while the other one (23) contains the compressor and/or the source of applied heat.

6. Apparatus according to one of Claims 2 to 5, characterised in that it includes means (27, 2) for bringing the downstream end of the upstream branch (22, 23) into communication selectively with the first branch (17) or with the evacuation duct (20), and/or means (1) for closing the inlet of the upstream branch, air being drawn from the cabin, through a first recycling duct (28), into the first branch when the latter is receiving no air from the upstream branch.

7. Apparatus according to one of Claims 1 to 6, characterised in that it includes means (5) for closing the fresh air inlet of the second branch (18), and a second recycling duct (29) which enables air to be drawn from the cabin into the second branch when the said inlet is closed.

8. Apparatus according to one of Claims 1 to 7, characterised in that it includes a second evaporator (30) located in the second branch (18) and arranged in the refrigerant fluid circuit (10) in parallel with the first evaporator (15) located in the first branch (17).

## Patentansprüche

1. Anlage für die Regelung der Temperatur im Fahrgastraum eines Fahrzeugs unter Verwendung eines Klimageräts (10), in dem ein Kühlmittel in einer Richtung zwischen einem Verdampfer (15), wo es Wärme von einem Luftstrom aufnimmt, und einem Kondensator (12), wo es Wärme an einen Luftstrom abgibt, zirkuliert, wobei in dieser Anlage ein Luftstrom vor der Einleitung in den Fahrgastraum durch den Kontakt mit dem Verdampfer gekühlt oder durch den Kontakt mit dem Kondensator erwärmt wird , **dadurch gekennzeichnet,** daß sie zwei Außenlufteinlässe umfaßt, die zu einem ersten Luftkreislaufstrang (17), in dem sich der Verdampfer (15) befindet, bzw. zu einem zweiten Luftkreislaufstrang (18), im dem sich der Kondensator (12) befindet, gehören, sowie einen Kanal (20) für die Ableitung nach außen und Mittel (4), um in Abhängigkeit von einem Sollwert wechselnd paarweise eine Verbindung des ersten und zweiten Strangs (17, 18) mit einem Lufteinlaß (21) zum Fahrgastraum und mit dem Ableitungskanal (20) herzustellen.

2. Anlage nach Anspruch 1, **dadurch gekennzeichnet,** daß Kühlkomponenten (11, 24) des Fahrzeugs in einem vorgeschalteten Strang (22, 23) des Kühlkreislaufs angeordnet sind, der zwischen dem ersten Strang und dem entsprechenden Außenlufteinlaß eingefügt ist.

3. Anlage nach Anspruch 2, **dadurch gekennzeichnet,** daß eine mit Betätigungsmitteln (26) versehene Zusatzheizungsquelle (25) in dem vorgeschalteten Strang angeordnet ist.

4. Anlage nach einem der Ansprüche 2 und 3 , **dadurch gekennzeichnet,** daß die Kühlkomponenten eine Speisebatterie (24) für einen elektrischen Antriebsmotor des Fahrzeugs und/oder einen Kompressor (11) umfassen, der zum Klimagerät (10) gehört.

5. Anlage nach Anspruch 4, **dadurch gekennzeichnet,** daß der vorgeschaltete Strang in zwei parallele Stränge unterteilt ist, von denen einer (22) die Batterie und der andere (23) den Kompressor und/oder die Zusatzheizungsquelle enthält.

6. Anlage nach einem der Ansprüche 2 bis 5 , **dadurch gekennzeichnet,** daß sie Mittel (27, 2) umfaßt, um eine Verbindung des hinteren Endes des vorgeschalteten Stranges (22, 23) wahlweise mit dem ersten Strang (17) oder mit dem Ableitungskanal (20) herzustellen, und/oder Mittel (1), um den Einlaß des vorgeschalteten Stranges zu verschließen, wobei ein erster Rückführkanal (28) die Zufuhr von Luft aus dem Fahrgastraum in den ersten Strang ermöglicht, wenn dieser keine Luft aus dem vorgeschalteten Strang erhält.

7. Anlage nach einem der Ansprüche 1 bis 6 , **dadurch gekennzeichnet,** daß sie Mittel (5) umfaßt, um den Außenlufteinlaß des zweiten Stranges (18) zu schließen, und einen zweiten Rückführkanal (29), um Luft aus dem Fahrgastraum in den zweiten Strang zu leiten, wenn dieser Einlaß geschlossen ist.

8. Anlage nach einem der Ansprüche 2 bis 7 , **dadurch gekennzeichnet,** daß sie einen zweiten Verdampfer (30) umfaßt, der im zweiten Strang (18) angebracht und im Kühlmittelkreislauf (10) mit dem im ersten Strang (17) angebrachten Verdampfer (15) parallel angeordnet ist.
